# EUROPEAN PATENT APPLICATION

(11) **EP 1 170 680 A2**
(43) Date of publication of application: **09.01.2002**
(21) Application number: 01116115.5
(22) Date of filing: 03.07.2001
(51) Int. Cl.: G06F 17/30, G06F 17/60

(54) **Content managing system, content managing apparatus, and content managing method**

(30) Priority: 05.07.2000 JP 2000203500
(71) Applicant: SONY CORPORATION, Tokyo (JP)
(72) Inventor: Munenaka, Mika, Shinagawa-ku, Tokyo (JP); Akashi, Tatsuya, Shinagawa-ku, Tokyo (JP); Kurihara, Junichi, Shinagawa-ku, Tokyo (JP); Ozaki, Junko, Shinagawa-ku, Tokyo (JP)
(74) Representative: Müller . Hoffmann & Partner Patentanwälte

(57) **Abstract**

A content managing system is disclosed, that has a content managing portion comprising a content library for storing files of a plurality of contents provided by a content provider, a library managing means for managing the content library, a customer file storing means for storing the file of a content of each user to an area assigned to each user, and a customer file managing means for managing the customer file storing means, wherein the content managing portion and a terminal unit of a user are connected through a network, and wherein the content managing portion is operated by a terminal unit of a user through the network so that a content linked to a page published by the content provider through the network is copied or linked from the content library to the area assigned to the user.

## Description

### BACKGROUND OF THE INVENTION

### Field of the Invention

The present invention relates to a content managing system, a content managing apparatus, and a content managing method that allow an advertisement posted on a home page that can be browsed through a network to be effectively published.

### Description of the Related Art

Nowadays, home pages created by various companies and individuals can be browsed through a network. Thus, when an advertisement is posted in a home page that is frequently accessed, the advertisement effect thereof becomes high. In addition, an advertisement posted in such a home page is linked to a home page of the advertising company. An advertisement posted in a home page is called a banner advertisement.

However, since a home page that is frequently accessed posts many advertisements, it takes a long time for a user to browse the home page.

In addition, it is difficult for an advertiser to obtain a high advertisement effect against one advertisement copy posted in a home page because there are so many home pages on the network in comparison with magazines. Moreover, when a large company makes a contract with one user for a banner advertisement posted in the user's home page, there is a difficult problem about contract conditions and so forth.

### OBJECTS AND SUMMARY OF THE INVENTION

Therefore, an object of the present invention is to provide a content managing system, a content managing apparatus, and a content managing method that allow a banner advertisement of an advertiser designated by a user to be posted in a pre-designated user area.

A first aspect of the present invention is a content managing system having a content managing portion comprising a content library for storing files of a plurality of contents provided by a content provider, a library managing means for managing the content library, a customer file storing means for storing the file of a content of each user to an area assigned to each user, and a customer file managing means for managing the customer file storing means, wherein the content managing portion and a terminal unit of a user are connected through a network, and wherein the content managing portion is operated by a terminal unit of a user through the network so that a content linked to a page published by the content provider through the network is copied or linked from the content library to the area assigned to the user.

A second aspect of the present invention is a content managing apparatus, comprising a content managing portion having a content library for storing files of a plurality of contents provided by a content provider, a library managing means for managing the content library, a customer file storing means for storing the file of a content of each user to an area assigned to each user, and a customer file managing means for managing the customer file storing means, and a communicating means for connecting the content managing apparatus to a network, wherein a terminal unit of a user is operated through the network so that a content linked to a page published by the content provider through the network is copied or linked from the content library to the area assigned to the user.

A third aspect of the present invention is a content managing method, comprising the steps of providing a library for storing the files of a plurality of contents provided by a content provider, providing a content managing portion for assigning a user area for storing the file of a content of each user to a customer file storage, connecting the content managing portion and a terminal unit of a user through a network, and operating the content managing portion by a terminal unit of a user through the network so that a content linked to a page published by the content provider through the network is copied or linked from the library to a user area.

Files of a plurality of contents (banner advertisements) provided by content providers (advertisers) are stored in a content library. The content library is managed by a library managing means (library managing server). A user area for each user is assigned to a customer file storing means (customer file storage). The file of a content is stored to each user area. The customer file storing means is managed by a customer file managing means (customer file managing server). They compose a content managing portion (content managing company). When the content managing portion is operated by a user terminal unit through a network, a content linked to a page published through the network can be copied from the content library to a user area. Thus, each user can store the file of his or her favorite content to his or her user area.

These and other objects, features and advantages of the present invention will become more apparent in light of the following detailed description of a best mode embodiment thereof, as illustrated in the accompanying drawings.

### BRIEF DESCRIPTION OF THE DRAWINGS

Fig. 1 is a block diagram showing the overall structure of a content managing system according to the present invention;
Fig. 2 is a schematic diagram for explaining the content managing system according to the present invention;
Fig. 3 is a schematic diagram for explaining the content managing system according to the present invention;
Fig. 4 is a schematic diagram for explaining the content managing system according to the present invention;
Fig. 5 is a schematic diagram for explaining the content managing system according to the present invention;
Fig. 6 is a schematic diagram for explaining the content managing system according to the present invention;
Fig. 7 is a schematic diagram for explaining a page displayed in the content managing system according to the present invention;
Fig. 8 is a schematic diagram for explaining a page displayed in the content managing system according to the present invention; and
Fig. 9 is a schematic diagram for explaining a page displayed in the content managing system according to the present invention.

### DETAILED DESCRIPTION OF THE PREFERRED EMBODIMENT

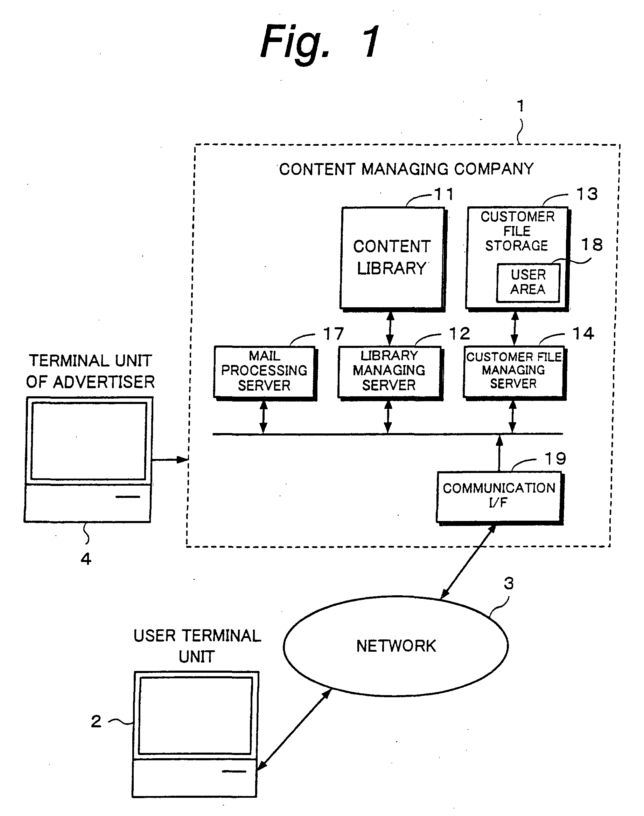

Next, with reference to the accompanying drawings, an embodiment of the present invention will be described. Fig. 1 is a schematic diagram showing an example of the structure of a system according to the present invention. In Fig. 1, reference numeral 1 is a content managing company. A banner advertisement linked to a home page published by a terminal unit 4 of an advertiser is provided to the content managing company 1. The content managing company 1 totally manages banner advertisements provided by advertisers. The content managing company 1 manages the banner advertisements as contents. In addition, the content managing company 1 performs a service for storing banner advertisements of users and a service in association thereto.

The content managing company 1 has a content library 11, a library managing server 12, a customer file storage 13, and a customer file managing server 14. The content library 11 stores many banner advertisements managed by the content managing company 1. The library managing server 12 manages the content library 11. The customer file storage 13 stores banner advertisements of users. The customer file managing server 14 manages the customer file storage 13. In addition, the content managing company 1 has a mail processing server 17. The mail processing server 17 exchanges messages with customers.

The servers 12, 14, and 17 are connected through a network 3 so that data is exchanged each other. The servers 12, 14, and 17 can be connected to the network 3 through a communication interface 19 such as a router. The network 3 is for example the Internet.

The servers 12, 14, and 17 can be accomplished by dedicated computers. Alternatively, the servers 12, 14, and 17 can be accomplished by one computer. The content library 11 and the customer file storage 13 may be accomplished by a storage device of a server. Alternatively, the content library 11 and the customer file storage 13 may be accomplished by dedicated computers. In the example shown in Fig. 1, the servers 12, 14, and 17, the content library 11, and the customer file storage 13 are managed by the same content managing company 1. Alternatively, the servers 12, 14, and 17, the content library 11, and the customer file storage 13 may be managed by different companies.

A user terminal unit 2 is a terminal unit operated by a user. The user terminal unit 2 can be accomplished by a personal computer. The user terminal unit 2 has a communicating function. The communicating function allows the user terminal unit 2 to be connected to the network 3. The user terminal unit 2 may be connected to the network 3 through a telephone line. Alternatively, a network service of a CATV (Cable Television) or a network service of a cellular phone may be used. Of course, a dedicated line, a ground wave, or a satellite wave may be used.

The content library 11 has a storage device with a large storage capacity for data of many contents that are managed. Files of contents stored in the content library 11 are managed by advertiser name, file name, registered date, capacity, genre, and content description.

The advertiser name is the name of each advertiser who is a company, an organization, or a person who registered the file of each content. The file name is the unique name of each file assigned so that the file of each content can be identified and the content of the advertisement can be implied. The registered date is the date on which the file of each content will be (was) registered to the content library 11. The capacity is the size of the file of each content. The capacity is normally represented in bytes. Alternatively, the capacity may be represented with a parameter corresponding to the format of each file. An example of a parameter is a time period necessary for reproducing a moving picture. The genre is information representing a category of the file of each content. The content description represents the description of the file of each content.

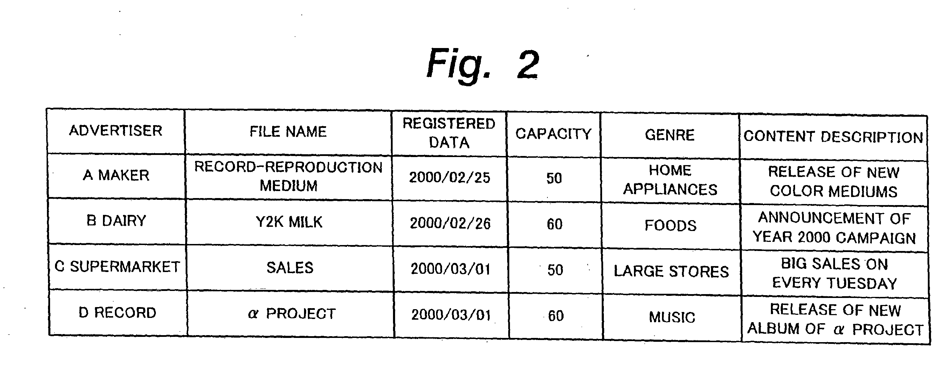

Each advertiser can freely change, replace, or delete contents shown in Fig. 2. However, when an advertiser deletes a content, he or she should notify the content managing company 1 of its deletion in advance.

The library managing server 12 manages the content library 11. When a content request is received from another device through the network, the library managing server 12 searches the content library 11 for the file of a designated content and transfers the file of the obtained content to the device. In addition, the library managing server 12 has a searching function for a keyword. When a keyword is supplied to the library managing server 12, it searches the content library 11 for the file of a content corresponding to the keyword and outputs the searched result. The content library 11 can be searched for each item an advertiser name, a file name, a registered date, a capacity, a genre, and a content description as a keyword.

When the library managing server 12 receives the file of a content that is newly supplied, the library managing server 12 registers the file to the content library 11.

The customer file storage 13 provides a user area 18 that a user who made a contract with the content managing company 1 can use for storing a content. The customer file storage 13 assigns a record capacity to each user. Each user is managed with a unique user ID. The total capacity for each user is designated corresponding to a contract that each user made with the content managing company 1.
Corresponding to the contract, the total capacity is designated and assigned as the user area 18 for each user. Each user can freely use the assigned user area 18 of the customer file storage 13 in the range of the contracted capacity in the period corresponding to the contract. In other words, each user can store the file of a new content to the user area 18, move the file of a content in the user area 18, and delete the file of a content from the user area 18. The user can store or link the file of his or her content to the user area 18.

When the content managing company 1 makes a contract with each user, the content managing company 1 will charge each user corresponding to the size of the user area 18. Of course, the content managing company 1 can change the size of the user area 18 later.

Each user can select the file of a content stored in the content library 11. The user can store or link the file of the selected content to the user area 18 of the customer file storage 13. In addition, the user can store the file of a content that he or she created to the user area 18 of the customer file storage 13.

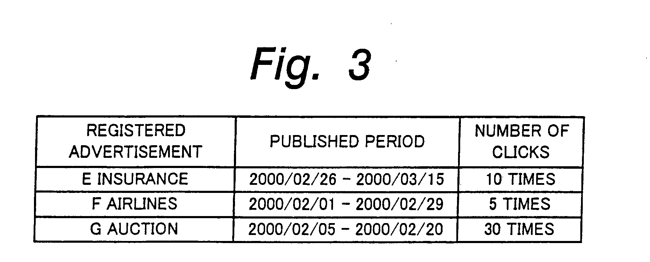

The customer file managing server 14 manages the files of contents stored in the user area 18 for each user of the customer file storage 13 using a database shown in Fig. 3. The customer file managing server 14 can perform for example a file searching process, a file transferring process, a file deleting process, and so forth. The customer file managing server 14 prohibits other users from accessing a user area 18 assigned to a particular user.

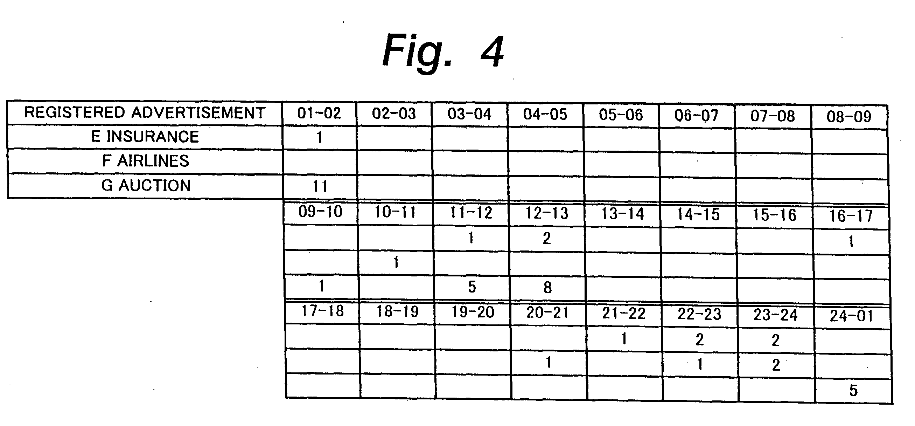

As shown in Fig. 3, the files of contents selected by users are managed by registered advertisement, published period, and number of clicks. The customer file managing server 14 performs a process for increasing and decreasing the user area 18 of each user due to a contract change and manages the contract period of each user. At that point, as shown in Fig. 4, a database that contains the number of accesses for each time zone for each registered advertisement is created.

When each user selects a content, a content selection command is transmitted from the user terminal unit 2 to the customer file managing server 14 through the network 3. Corresponding to the selection command, a database containing for each user corresponding to the selection command is created in the customer file managing server 14.

A command for copying or linking the file of the content from the library managing server 12 to the user area 18 is issued. The library managing server 12 searches the content library 11 for the file of a desired content. When the content library 11 contains the file, the library managing server 12 retrieves the file from the content library 11 and sends or links the retrieved file to the customer file managing server 14. The customer file managing server 14 copies or links the file to the user area 18 of the customer file storage 13.

Thus, a content can be selected by copying or linking a file from the content library 11 to the user area 18 of the customer file storage 13.

Each user can access the user area 18 assigned to him or her through the user terminal unit 2. As was described above, the file of a content that the user selected is stored or linked in the user area 18.

In the system, as was described above, the user area 18 for storing a content is assigned to each user who made a contract with the content managing company 1. With the user area 18, each user can select a content and use various services.

When the user selects the file of a content stored in the content library 11, the file is stored or linked to the assigned user area 18. The user can anytime enjoy the file of a content stored in the user area 18.

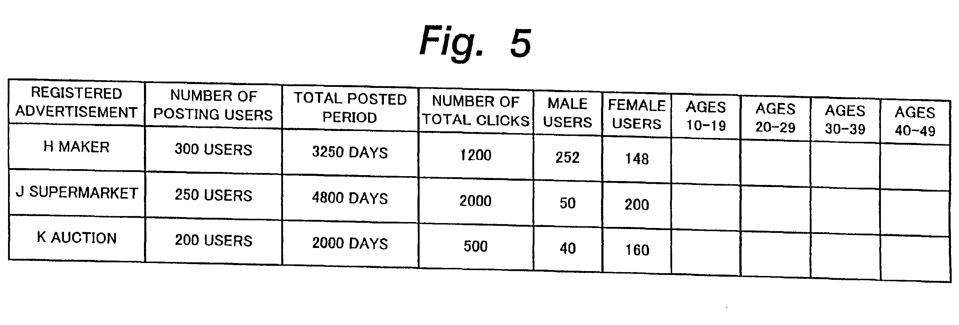

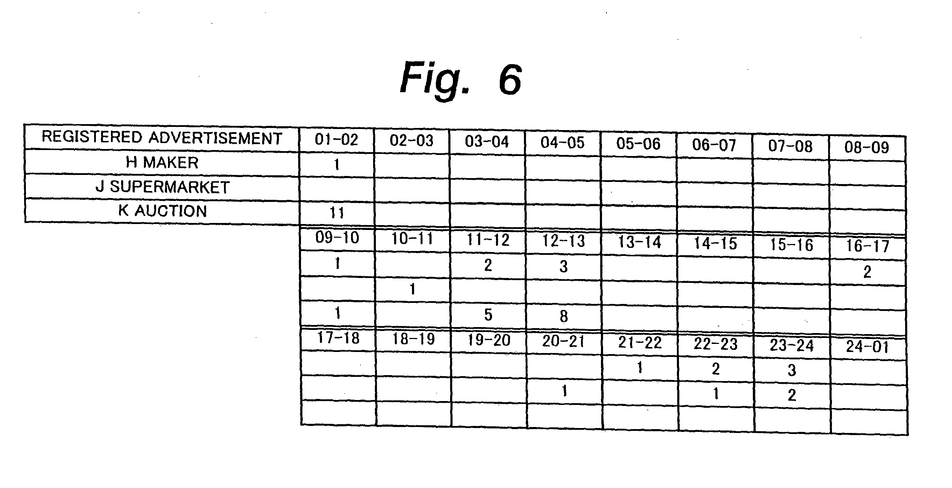

In addition, as shown in Fig. 5, the customer file managing server 14 creates a database containing fields of registered advertisement, number of posting users, total posted period, number of clicks, number of posting male users, number of posting female users, and number of posting users in each age group. Since the number of posting users and the number of total clicks are obtained from the database shown in Fig. 5, each advertiser can make a contract with the content managing company 1 for the advertisement fee based on each posting user or each click. In addition, as shown in Fig. 6, a database containing the number of accesses in each time zone is created.

Next, a service provided by the content managing company 1 will be described in reality.

The user terminal unit 2 has a communicating function for connecting it to the network 3. A browser that allows the user to browse web pages is installed to the user terminal unit 2. When the user uses a service provided by the content managing company 1, he or she makes a contract with the content managing company 1. After the user made a contract with the content managing company 1, it assigns a user ID and a password to the user.

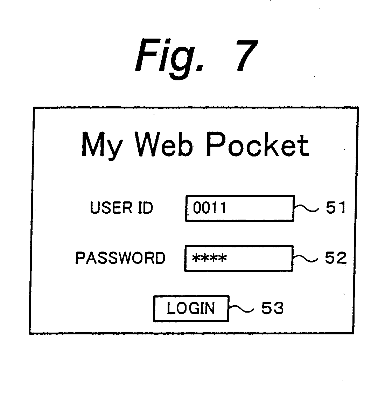

When a user who made a contract with the content managing company 1 wants to use the service of the content managing company 1, he or she connects the user terminal unit 2 to the network 3, starts up the browser, and accesses the URL (Uniform Resource Locator) of the content managing company 1. When the user terminal unit 2 accesses the URL of the content managing company 1, it transmits an authentication page shown in Fig. 7 to the user terminal unit 2.

The authentication page contains a user ID input box 51 and a password input box 52. The user inputs the user ID and the password assigned by the content managing company 1 to those boxes and then clicks a login button 53 with the user terminal unit 2.

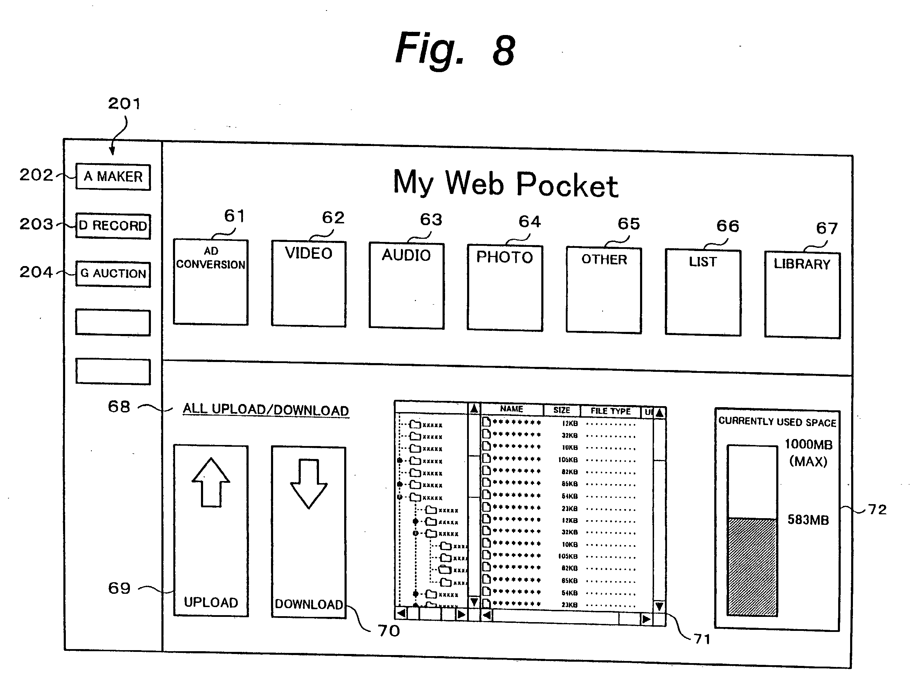

When the user inputs the user ID and the password to those boxes and then clicks the login button 53, the content managing company 1 performs an authenticating process for determining whether or not the accessed user is a user who made a contract with the content managing company 1. When the content managing company 1 has authenticated the user as a valid user, the content managing company 1 transmits a user home page shown in Fig. 8 to the user terminal unit 2.

The user home page is a home page that is dedicated for each user and that is used for receiving a service from the content managing company 1. As an example of a service, the user home page displays an AD CONVERSION button 61, a VIDEO button 62, an AUDIO button 63, a PHOTO button 64, an OTHER button 65, a LIST button 66, a LIBRARY button 67, an ALL UPLOAD / DOWNLOAD button 68, an UPLOAD button 69, and a DOWNLOAD button 70. In addition, the user home page displays a display portion 71 and a display portion 72. The display portion 71 displays the directory of the user terminal unit 2. The display portion 72 displays the currently used space of the user area 18. A left pane and a right pane of the display portion 71 display a tree view and files, respectively.

In addition, the user home page displays a banner advertisement portion 201 for publishing banner advertisements that the user selects. The banner advertisement portion 201 displays banner advertisements that the user selected from a BANNER LIBRARY page. In Fig. 8, the banner advertisement portion 201 displays a banner advertisement 202 of A Maker, a banner advertisement 203 of D Record, and a banner advertisement 204 of G Auction.

When the user clicks the AD CONVERSION button 61, an AD CONVERSION page appears. When the user clicks the VIDEO button 62, a VIDEO page appears. When the user clicks the AUDIO button 63, an AUDIO page appears. When the user clicks the PHOTO button 64, a PHOTO page appears. When the user clicks the OTHER button 65, other pages for computer application software, games, and so forth appear. When the user clicks the LIST button 66, all the VIDEO page, the AUDIO page, the PHOTO page, and the OTHER page appear. When the user clicks the LIBRARY button 67, a CONTENT LIBRARY page appears. When the user clicks the ALL UPLOAD / DOWNLOAD button 68, an ALL UPLOAD / DOWNLOAD page appears. When the user clicks the UPLOAD button 69, an UPLOAD page appears. When the user clicks the DOWNLOAD button 70, a DOWNLOAD page appears.

When the user clicks the banner advertisement 202, the home page of A Maker that is linked to the banner advertisement 202 appears. When the banner advertisement 203 is clicked, the home page of D Record that is linked to the banner advertisement 203 appears. When the banner advertisement 204 is clicked, the home page of G Auction that is linked to the banner advertisement 204 appears.

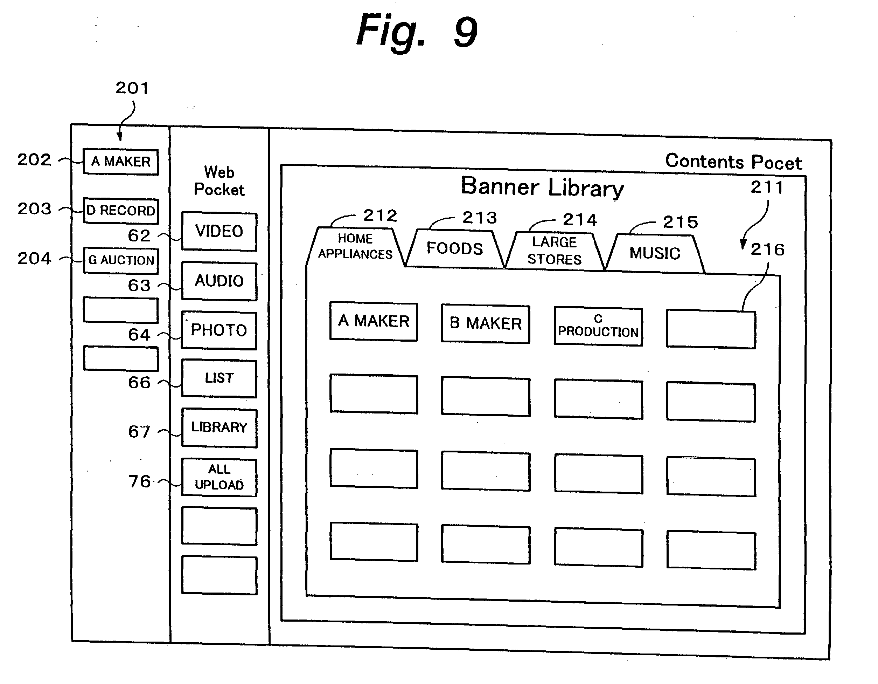

When the user clicks the LIBRARY button 67 on the user home page with the user terminal unit 2 shown in Fig. 8, a content library request command is transmitted to the content managing company 1 through the network 3. When the content managing company 1 receives the content library request command from the user terminal unit 2, the content managing company 1 transmits a CONTENT LIBRARY page (not shown) to the user terminal unit 2 through the network 3. When the user clicks a BANNER LIBRARY button on the CONTENT LIBRARY page, a BANNER LIBRARY page shown in Fig. 9 appears.

Banner advertisements are categorized and contained in a plurality of folders 211. Fig. 9 shows an example of the BANNER LIBRARY page. The BANNER LIBRARY page displays four folders. Each folder has a tab that displays the name thereof. The BANNER LIBRARY page shown in Fig. 9 displays a Home Appliances folder 212, a Foods folder 213, a Large Stores folder 214, and a Music folder 215.

Next, the Home Appliances folder 212 selected in Fig. 9 will be described. The Home Appliances folder 212 displays a plurality of banner advertisements 216 provided by a plurality of advertisers. When the user drags a desired banner advertisement in the selected folder and drops it to the banner advertisement portion 201, the banner advertisement can be copied to the banner advertisement portion 201. The user can change, replace, and delete banner advertisements that appears in the banner advertisement portion 201.

The content managing company 1 can know banner advertisements selected by users. In addition, the content managing company 1 can create databases containing registered advertisements clicked by users, clicked time, and the number of clicks as shown in Figs. 3, 4, 5, and 6.

According to the embodiment, a banner advertisement is moved to a BANNER LIBRARY page through a content library page. Alternatively, a banner advertisement may be moved from a user home page. In reality, a user home page may display a BANNER LIBRARY button. When the BANNER LIBRARY button is clicked, the BINARY LIBRARY page may be displayed.

According to the embodiment, as a method of which the content managing company 1 receives banner advertisements from the advertiser terminal unit 4, the network 3 can be used. Alternatively, a dedicated line may be used. Further alternatively, a ground wave or a satellite wave may be used.

According to the embodiment, a database containing the number of accesses in each access time zone is created. Alternatively, a database containing the number of accesses on each access date may be created. Further alternatively, a database containing the number of accesses in each access month may be created.

According to the present invention, when a content managing company makes a contract with an advertiser for an advertisement and posts the advertisement to the user area of a user, he or she can publish the posted advertisement as a banner advertisement on his or her home page that is frequently accessed. In addition, each user can obtain the latest information from each banner advertisement. When each user inputs his or her user ID and password assigned by the content managing company 1, he or she can access his or her user area with other than his or her terminal unit.

In addition, according to the present invention, each advertiser can make a contract with a non-anonymous user who has been assigned a user area for a banner advertisement. In addition, since the advertiser posts a banner advertisement in a user area that is a secret area, the banner advertisement can be prevented from being misappropriated or abused. In addition, since the contract method of which the content managing company makes a contract with each advertiser depends on each click or each posted banner advertisement. Thus, the advertiser can clearly know the advertisement effect.

Although the present invention has been shown and described with respect to a best mode embodiment thereof, it should be understood by those skilled in the art that the foregoing and various other changes, omissions, and additions in the form and detail thereof may be made therein without departing from the spirit and scope of the present invention.

## Claims

1. A content managing system having a content managing portion comprising:
a content library for storing files of a plurality of contents provided by a content provider;
library managing means for managing said content library;
customer file storing means for storing the file of a content of each user to an area assigned to each user; and
customer file managing means for managing said customer file storing means,
wherein said content managing portion and a terminal unit of a user are connected through a network, and
wherein said content managing portion is operated by a terminal unit of a user through the network so that a content linked to a page published by the content provider through the network is copied or linked from said content library to the area assigned to the user.

2. The content managing system as set forth in claim 1,
wherein the contents are advertisements.

3. The content managing system as set forth in claim 1,
wherein the content provider can freely change, replace, and delete the file of a content provided to said content library.

4. The content managing system as set forth in claim 1,
wherein said content managing portion counts the number of users who copied or linked the contents to their user areas and creates a database containing the counted values.

5. The content managing system as set forth in claim 1,
wherein said content managing portion counts the number of male users and the number of female users who copied their contents to their user areas and creates a database containing the counted values.

6. The content managing system as set forth in claim 1,
wherein said content managing portion counts the number of users in each age group who copied their contents to their user areas and creates a database containing the counted values.

7. The content managing system as set forth in claim 1,
wherein said content managing portion counts the number of clicks of each content copied or linked to each user area and creates a database containing the counted values.

8. The content managing system as set forth in claim 1,
wherein said content managing portion counts the clicked date and time of each content copied or linked to each user area and creates a database containing the counted values.

9. The content managing system as set forth in claim 1,
wherein said content managing portion counts the period for which each content was stored or linked in each user area and creates a database containing the counted values.

10. A content managing apparatus, comprising:
a content managing portion having:
a content library for storing files of a plurality of contents provided by a content provider,
library managing means for managing said content library,
customer file storing means for storing the file of a content of each user to an area assigned to each user, and
customer file managing means for managing said customer file storing means;
and
communicating means for connecting the content managing apparatus to a network,
wherein a terminal unit of a user is operated through the network so that a content linked to a page published by the content provider through the network is copied from said content library to the area assigned to the user.

11. The content managing apparatus as set forth in claim 10,
wherein the contents are advertisements.

12. The content managing apparatus as set forth in claim 10,
wherein the content provider can freely change, replace, and delete the file of a content provided to said content library.

13. The content managing apparatus as set forth in claim 10,
wherein the number of users who copied or linked the contents to their user areas is counted and a database containing the counted values is created.

14. The content managing apparatus as set forth in claim 10,
wherein the number of male users and the number of female users who copied their contents to their user areas is counted and a database containing the counted values is created.

15. The content managing apparatus as set forth in claim 10,
wherein the number of users in each age group who copied or linked their contents to their user areas is counted and a database containing the counted values is created.

16. The content managing apparatus as set forth in claim 10,
wherein the number of clicks of each content copied or linked to each user area is counted and a database containing the counted values is created.

17. The content managing apparatus as set forth in claim 10,
wherein the clicked date and time of each content copied or linked to each user area is counted and a database containing the counted values is created.

18. The content managing apparatus as set forth in claim 10,
wherein the period for which each content was stored in each user area is counted and a database containing the counted values is created.

19. A content managing method, comprising the steps of:
providing a library for storing the files of a plurality of contents provided by a content provider;
providing a content managing portion for assigning a user area for storing the file of a content of each user to a customer file storage;
connecting the content managing portion and a terminal unit of a user through a network, and
operating the content managing portion by a terminal unit of a user through the network so that a content linked to a page published by the content provider through the network is copied or linked from the library to a user area.

20. The content managing method as set forth in claim 19,
wherein the contents are advertisements.

21. The content managing method as set forth in claim 19,
wherein the content provider can freely change, replace, and delete the file of a content provided to the library.

22. The content managing method as set forth in claim 19,
wherein the content managing portion counts the number of users who copied or linked the contents to their user areas and creates a database containing the counted values.

23. The content managing method as set forth in claim 19,
wherein the content managing portion counts the number of male users and the number of female users who copied or linked their contents to their user areas and creates a database containing the counted values.

24. The content managing method as set forth in claim 19,
wherein the content managing portion counts the number of users in each age group who copied or linked their contents to their user areas and creates a database containing the counted values.

25. The content managing method as set forth in claim 19,
wherein the content managing portion counts the number of clicks of each content copied or linked to each user area and creates a database containing the counted values.

26. The content managing method as set forth in claim 19,
wherein the content managing portion counts the clicked date and time of each content copied or linked to each user area and creates a database containing the counted values.

27. The content managing method as set forth in claim 19,
wherein the content managing portion counts the period for which each content was stored or linked in each user area and creates a database containing the counted values.
